# EUROPEAN PATENT SPECIFICATION

(11) **EP 1 903 539 B1**
(45) Date of publication and mention of the grant of the patent: **07.10.2015**
(21) Application number: 06380237.5
(22) Date of filing: 29.08.2006
(51) Int. Cl.: G09F 3/14, A22C 17/10

(54) **Identification device intented to be mounted around an object and corresponding tracking process**
Identifikationsgerät zur Anbringung um ein Objekt und ein Verfahren zu dessen Verfolgung
Appareil d'identification pour l'apposition autour d'un objet ainsi que le procédé de tracabilité de celui-ci

(43) Date of publication of application: 26.03.2008
(73) Proprietor: Athelia Solutions Iberica S.L., 28290 Las Matas - Madrid (ES); Athelia Solutions, 75007 Paris (FR)
(72) Inventor: Garcia Contreras, Gonzalo, 75321 Paris Cedex 07 (FR)
(74) Representative: De Cuenca, Emmanuel Jaime

(56) References cited:
- US-A- 3 067 534
- US-A1- 2002 054 940
- US-A1- 2005 000 135

## Description

The present invention relates to an identification device for objects of various geometry, notably hams, and corresponding tracking process.

More specifically, the invention relates to an identification device intended to be mounted around an object, comprising an information support bound to a flexible attach element forming a closed loop and a rigid or semi rigid fastening element. The invention also relates to a tracking process for a plurality of objects comprising a step of hanging said objects from one of their extremities and an individual step of mounting of such an identification device on each of the objects.

Before it can be served, ham needs to undergo a long curation process during which it is suspended from one of its extremities. Much of the ham's water is evacuated throughout that process causing a significant loss of volume.

For sanitary and efficiency reasons, it is important to be able to know at all time how advanced in the process a specific ham is. This is especially true in the case of large production facilities, where one easily looses track of individual hams. Identification is also important during the commercialization phase that follows the curation process.

Therefore has arisen a need for an identification device located on every ham, allowing the producer to easily obtain information regarding the current status of a specific ham. Furthermore, the device must be able to adapt itself to the loss of volume incurred by the ham during its production process.

Spanish utility model no 1045756 describes such a device. It encompasses the use of an electronic micro-chip, held in a plastic material, able to store and communicate relevant information pertaining to the current status of the ham, whether in it's production process or in it's commercial phase.

However, the actual state of the art requires the ham producer to take down the ham from its hanging position in order to install the device. Once the device is installed, the producer must then hang back the ham and do so with all of his hams. At the end of either the curation process or the commercialization process, the producer must repeat this operation to remove the device from each and every ham. Those multiple hanging operations are time and resource consuming for the producers.

Moreover, the known identification devices are difficult to handle and expensive to manufacture.

Document US 2005/0000135 A1 considered as the closest prior art discloses an identification tag comprising a label portion attached to a looped cord. The looped cord comprises at least one bead for secury the cord to an object.

Document US 2002/0054940 discloses a band sized identifying device to fit around a limb of meat carcass.

Document US 3,067,534 discloses a marking tag for poultry made of flat sheet plastic material provided with jaws and a recess to admit the skin of the poultry.

The objective of the present invention is to overcome all of, or part of the abovementioned disadvantages of the prior art solutions.

For that purpose, the identification device of this invention and its related tracking process, in conformity with the generic description of the above preamble, are defined by independent claims 1 and 11 respectively.

Moreover, various configurations of the invention can comprise one or more of the following characteristics :
- the information support is comprised in or on a surface of the fastening element,
- the information support is an electronic micro-chip,
- the attach element runs through at least one hole formed in the fastening element,
- according to claim 4 the attach element and the fastening element are proportioned relatively to permit the moving closer and together of the first and second extremities of the closed loop to form a second smaller closed loop, the fastening element being proportioned to be the able to be introduced into the first loop to form a blocking abutment for the second extremity,
- in its mounted position around an object, the fastening element is located between the first and the second extremities of the first closed loop,
- the rigid or semi-rigid portion stretches transversally to the attach element to a distance about 10mm to 60mm and preferably around 30mm,
- the attach element has a circumference of about 200 to 500 mm and preferably around 300mm,
- the attach element is made of an elastic material.

More characteristics are limited in dependent claims.

Various other advantages and specifics will become evident through the reading of the following description, which will refer to the these figures:
- Figure 1 illustrates a possible configuration of the identification device, unmounted, at rest position.
- Figure 2 schematically shows the identification device of figure 1, partially wrapped around an object and about to be mounted.
- Figure 3 schematically shows the identification device of figures 1 and 2, in its mounted position, wrapped around the object and held in position.
- Figure 4 illustrates a close-up of figure 3, showing a possible mode of realization of the fastening.
- Figure 5 displays a ham, hanging from one of its extremities, on which an identification device according to figure 1 has been installed around its mounting portion.

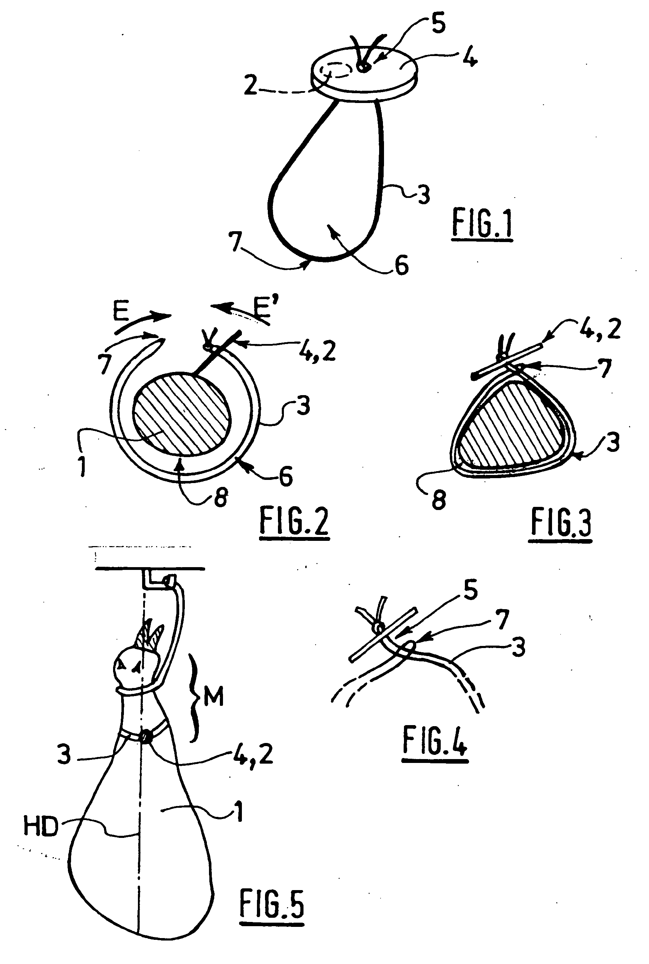

As illustrated on figure 1, the identification device comprises an attach element 3 forming a first closed loop 6 with two extremities, a first one 5 and a second one 7. The circumference of the attach element 3 will be chosen according to the size of the object it is destined to encircle, but for the purposes of ham identification, it is typically of about 200 to 500 mm, and preferably around 300 mm. The attach element 3 can be made of an elastic material like rubber or such.

The attach element 3 is bound at its first extremity 5 to a fastening element 4 of various possible shapes composed of a rigid or semi-rigid material. Binding of said fastening element 4 with the first extremity of the attach element can be realized in various way. As shown in figure 1, binding can be obtained by inserting the first extremity 5 of the attach element 3 through a hole comprised in the fastening element 4. A knot in the first extremity of the attach element prevents the drifting of the fastening element 4, hence the binding. In another possible configuration; the binding is obtained by having the first extremity of the attach element run through two holes comprised in the fastening element.

Figure 1 illustrates a disk-shaped fastening element 4 transverse to the attach element 3. In this possible configuration, the rigid or semi-rigid portion of the attach element 4 stretches transversally to the attach element 3 to a distance of about 10 to 60 mm, and preferably around 30 mm.

However, the fastening element 4 could be spherical, elliptical or of any other shape so as long as it provides an efficient abutment, or other retention mean, to insure its binding with the second extremity 7 of the attach element. In yet another variant, the fastening element 4 includes a hook-shaped outgrowth destined to receive and hold the second extremity of the attach element.

The information identifying the object can be contained in various carriers. Bar codes, serial numbers and electronic microchips are examples of such carriers. If the identification device is an electronic microchip, it can be passive or active and read only or read-and-write able.

In the configuration shown on figure 1, the information support 2 is an electronic microchip embedded in the fastening element 4. However, the information support 2 could also be located on the surface of the fastening element (in the case of a bar code for instance). In another possible configuration, the information support is located inside the attach element, or encapsulated between two layers of a rigid or semi-rigid material and directly mounted on the attach element.

Should the identification device be used on objects destined for human consumption, the materials of its components would comply with the applicable standards of the agro-alimentary industry. As an example, the material used for the fastening element could be GE Plastics' GFN2 NORYL modified PPO Resin.

The abovementioned identification device is a necessary element of a two (or more) steps tracking process that is also the subject-matter of this invention.

The first step of this process consists in the hanging of the object 1 from one of its extremity, therefore defining a hanging direction HD. Figure 5 illustrates such hanging, in which the object 1 is a ham attached from its lower leg extremity.

The second step of this process consists in the mounting on an object of an identification device such a previously described. The mounting of the identification device takes place on a mounting portion M of the object 1, typically around 10 to 50 mm from the paw if the object 1 is a ham, and the encircling can be performed transversally to the hanging direction HD.

As illustrated in figure 2, the mounting step can be carried out by encircling the object with the identification device and by bringing closer the two extremities 5, 7 of the attach element 3 along opposite directions E, E'. When the two extremities are close enough, the fastening element is inserted inside the second extremity 7 (i.e. inside the first closed loop) so as to form a second closed loop 8. This new loop 8 is maintained closed by the blocking effect of the fastening element on the second extremity 7 of the attach element 4 as shown in figures 3 and 4. In this configuration, the fastening element 4 acts as an abutment to prevent the second loop 8 from opening.

Another mounting possibility involves exploiting a hook-shaped outgrowth of the fastening element 4 such as previously described. In this different scenario, the mounting is carried out by encircling the identification device around the object 1 and forming a second closed loop by fastening the second extremity 7 of the attach element to a hook-shaped outgrowth located on the fastening element 4.

In order to create a second loop 8 as described in the two aforementioned variants of the mounting step, the circumference of the first loop 6 must be roughly the double of the circumference of the cross section of the mounting portion M of the object 1. However, if the material composing the attach element 3 is elastic, the circumference of the first loop 6 should be inferior to the double of the circumference of the cross section of the mounting portion M of the object 1.

If the object 1 is a ham, the use of such an elastic material for the attach element 3 is particularly advantageous since it allows the information device to adapt itself to the change of volume incurred by the ham. Therefore, the device is always tightly attached to the ham and will not fall from it.

The tracking process can comprise an additional step of removing the identification device from the object 1 by way of undoing the cooperative effect of the fastening element 4 with the second extremity 7 of the attach element.

In the configuration shown on figures 3 and 4, the cooperative effect is cancelled by taking out the fastening element 4 from the second extremity 7 of the attach element.

The invention presents another advantage in that the canceling of this cooperative effect requires a simple operation that can be performed single handedly.

## Claims

1. Identification device for mounting around a ham, comprising an information support (2) bound to a flexible attach element (3) forming a first closed loop (6) the attach element (3) running through at least one hole formed in the fastening element (4), and a rigid or semi rigid fastening element (4);
**characterized in that** the fastening element (4) is bound to a first extremity (5) of the first closed loop (6), the information support (2) being comprised in or on a surface of the fastening element (4), the fastening element (4) comprising, in the first extremity (5) of the first closed loop (6), a rigid or semi-rigid portion substantially transversal to the attach element (3), the rigid or semi-rigid portion substantially transversal to the attach element (3) forming the only abutment for cooperating with a second extremity (7) of the first closed loop (6) for the binding around an ham(1), and **characterized in that** in its mounted position around an object (1), the fastening element (4) is located between the first (5) and the second (7) extremities of the first closed loop (6).

2. Identification device according to claim 1, **characterized in that** the information support (2) is an electronic micro-chip embedded in the fastening element.

3. Identification device according to any of claims 1 to 32, **characterized in that** the attach element (3) the attach element (3) has a circumference of 200mm to 500mm and the rigid or semi-rigid portion stretching transversally to the attach element (3) to a distance comprised between 10mm and 60mm, to permit the moving closer and together of the first (5) and second (7) extremities of the closed loop (6) to form a second smaller closed loop, and to introduce the fastening element (4) into the first loop (6) to form a blocking abutment for the second extremity (7).

4. Identification device according to any of claims 1 to 3, **characterized in that** the rigid or semi-rigid portion stretching transversally to the attach element (3) to a distance of 30mm.

5. Identification device according to any of claims 1 to 4, **characterized in that** the attach element (3) has a circumference of 300mm.

6. Identification device according to any of claims 1 to 5, **characterized in that** the attach element (3) is made of an elastic material.

7. Identification device according to any of claims 1 to 6, **characterized in that** the fastening element (4) has a disc or spherical or elliptical shape.

8. Identification device according to any of claims 1 to 6, **characterized in that** the fastening element (4) includes a hook-shaped outgrowth to receive and hold the second extremity of the attach element.

9. Tracking process for a plurality of hams comprising a step of hanging said hams from one of their extremities, defining a hanging direction (HD), and a step of mounting on each ham (1) a respective identification device, **characterized in that** the identification devices are according to any of claims 1 to 8.

10. Tracking process according to claim 9, **characterized in that** the mounting step is carried out by encircling the attach element (3) of the identification device around the ham (1) and by making the fastening element (4) of the first extremity (5) of said attach element (3) cooperate with the second extremity (7).

11. Tracking process according claim 9 or 10, **characterized in that** the circumference of the first loop (6) is roughly the double of the circumference of the cross section of the mounting portion (M) of the ham (1) receiving the identification device.

12. Tracking process according to any of claims 9 to 11, **characterized in that** the circumference of the first loop (6) of the attach element (3) is inferior than the double of the circumference of the mounting portion (M) of the ham (1) receiving the identification device.

13. Tracking process according to any of claims 9 to 12, **characterized in that** the encircling of the attach element (3) around the ham (1) is realized transversally to the hanging direction (HD) of the ham (1).

14. Tracking process according to any of claims 9 to 13, **characterized in that** it includes a step of removing the identification device by way of undoing the cooperative binding effect of the first extremity (5) of the attach element (3) with the fastening element (4) of the second extremity (7).

## Patentansprüche

1. Identifizierungsvorrichtung zum Anbringen um einen Schinken herum, umfassend einen Informationsträger (2), angebunden an ein flexibles Anbringungselement (3), welches eine erste geschlossene Schlaufe (6) ausbildet, wobei das Anbringungselement (3) durch wenigstens ein in dem Befestigungselement (4) ausgebildetes Loch verläuft, sowie ein steifes oder halbsteifes Befestigungselement (4);
**dadurch gekennzeichnet, dass** das Befestigungselement (4) an ein erstes Ende (5) der ersten geschlossenen Schlaufe (6) angebunden ist, wobei der Informationsträger (2) in oder an einer Oberfläche des Befestigungselements (4) enthalten ist, wobei das Befestigungselement (4) an dem ersten Ende (5) der ersten geschlossenen Schlaufe (6) einen steifen oder halbsteifen Abschnitt im Wesentlichen quer zum Anbringungselement (3) umfasst, wobei der steife oder halbsteife Abschnitt im Wesentlichen quer zum Anbringungselement (3) den einzigen Anschlag zum Zusammenwirken mit einem zweiten Ende (7) der ersten geschlossenen Schlaufe (6) zum Festbinden um den Schinken (1) ausbildet, und **dadurch gekennzeichnet, dass** das Befestigungselement (4) in seiner angebrachten Position um ein Objekt (1) zwischen dem ersten (5) und dem zweiten (7) Ende der ersten geschlossenen Schlaufe (6) angeordnet ist.

2. Identifizierungsvorrichtung nach Anspruch 1, **dadurch gekennzeichnet, dass** der Informationsträger (2) ein im Befestigungselement eingebetteter elektronischer Mikrochip ist.

3. Identifizierungsvorrichtung nach einem der Ansprüche 1 bis 2,
**dadurch gekennzeichnet, dass** das Anbringungselement (3) einen Umfang von 200 mm bis 500 mm aufweist und dass der steife oder halbsteife Abschnitt sich quer zum Anbringungselement (3) um einen Abstand von zwischen 10 mm und 60 mm erstreckt, um das nähere Zusammenschieben des ersten (5) und des zweiten (7) Endes der geschlossenen Schlaufe (6) zu ermöglichen, um eine zweite kleinere Schlaufe auszubilden und um das Befestigungselement (4) in die erste Schlaufe (6) einzuführen, um einen blockierenden Anschlag für das zweite Ende (7) auszubilden

4. Identifizierungsvorrichtung nach einem der Ansprüche 1 bis 3,
**dadurch gekennzeichnet, dass** der steife oder halbsteife Abschnitt sich um einen Abstand von 30 mm quer zum Anbringungselement (3) erstreckt.

5. Identifizierungsvorrichtung nach einem der Ansprüche 1 bis 4,
**dadurch gekennzeichnet, dass** das Anbringungselement (3) einen Umfang von 300 mm aufweist.

6. Identifizierungsvorrichtung nach einem der Ansprüche 1 bis 5,
**dadurch gekennzeichnet, dass** das Anbringungselement (3) aus einem elastischen Material gefertigt ist.

7. Identifizierungsvorrichtung nach einem der Ansprüche 1 bis 6,
**dadurch gekennzeichnet, dass** das Befestigungselement (4) eine scheibenförmige oder kugelförmige oder ovale Form aufweist.

8. Identifizierungsvorrichtung nach einem der Ansprüche 1 bis 6,
**dadurch gekennzeichnet, dass** das Befestigungselement (4) einen hakenförmigen Vorsprung aufweist, um das zweite Ende des Anbringungselements aufzunehmen und zu halten.

9. Nachverfolgungsverfahren für mehrere Schinken, umfassend einen Schritt des Aufhängens der Schinken an einer ihrer Extremitäten, wodurch eine Hängerichtung (HD) definiert wird, und einen Schritt des Anbringens einer entsprechenden Identifizierungsvorrichtung an jedem Schinken (1), **dadurch gekennzeichnet, dass** die Identifizierungsvorrichtungen einem der Ansprüche 1 bis 8 entsprechen.

10. Nachverfolgungsvorgang nach Anspruch 9, **dadurch gekennzeichnet, dass** der Anbringungsschritt dadurch ausgeführt wird, dass das Anbringungselement (3) der Identifizierungsvorrichtung um den Schinken (1) gelegt wird und indem bewirkt wird, dass das Befestigungselement (4) des ersten Endes (5) des Anbringungselements (3) mit dem zweiten Ende (7) zusammenwirkt.

11. Nachverfolgungsvorgang nach Anspruch 9 oder 10, **dadurch gekennzeichnet, dass** der Umfang der ersten Schlaufe (6) ungefähr dem Doppelten des Umfangs des Querschnitts des Anbringungsabschnitts (M) des Schinkens (1) entspricht, der die Identifizierungsvorrichtung erhält.

12. Nachverfolgungsvorgang nach einem der Ansprüche 9 bis 11, **dadurch gekennzeichnet, dass** der Umfang der ersten Schlaufe (6) des Befestigungselements (3) weniger als das Doppelte des Umfangs des Anbringungsabschnitts (M) des Schinkens (1) beträgt, der die Identifizierungsvorrichtung erhält.

13. Nachverfolgungsvorgang nach einem der Ansprüche 9 bis 12, **dadurch gekennzeichnet, dass** das Herumlegen des Anbringungselements (3) um den Schinken (1) quer zur Hängerichtung (HD) des Schinkens (1) ausgeführt wird.

14. Nachverfolgungsvorgang nach einem der Ansprüche 9 bis 13, **dadurch gekennzeichnet, dass** er einen Schritt des Entfernens der Identifizierungsvorrichtung durch Lösen der kooperativen Bindungswirkung des ersten Endes (5) des Anbringungselements (3) mit dem Befestigungselement (4) des zweiten Endes (7) umfasst.

## Revendications

1. Dispositif d'identification destiné à être monté autour d'un jambon, comprenant un support d'information (2) attaché à un élément d'attache flexible (3) formant une première boucle fermée (6), l'élément d'attache (3) s'étendant à travers au moins un trou formé dans l'élément de fixation (4) et un élément de fixation rigide ou semi-rigide (4) ;
**caractérisé en ce que** l'élément de fixation (4) est relié à une première extrémité (5) de la première boucle fermée (6), le support d'information (2) étant compris dans ou sur une surface de l'élément de fixation (4), l'élément de fixation (4) comprenant, dans la première extrémité (5) de la première boucle fermée (6), une partie rigide ou semi-rigide sensiblement transversale à l'élément d'attache (3), la partie rigide ou semi-rigide sensiblement transversale à l'élément d'attache (3) formant la seule butée permettant de coopérer avec une seconde extrémité (7) de la première boucle fermée (6) pour la liaison autour d'un jambon (1), et **caractérisé en ce que**, dans sa position montée autour d'un objet (1), l'élément de fixation (4) est situé entre les première (5) et seconde (7) extrémités de la première boucle fermée (6).

2. Dispositif d'identification selon la revendication 1, **caractérisé en ce que** le support d'information (2) est une micropuce électronique intégrée dans l'élément de fixation.

3. Dispositif d'identification selon l'une quelconque des revendications 1 à 2, **caractérisé en ce que** l'élément d'attache (3) l'élément d'attache (3) a une circonférence de 200 mm à 500 mm et la partie rigide ou semi-rigide s'étire transversalement à l'élément d'attache (3) sur une distance comprise entre 10 mm et 60 mm, pour permettre de rapprocher et de joindre ensemble les première (5) et seconde (7) extrémités de la boucle fermée (6) afin de former une seconde boucle fermée plus petite et afin d'introduire l'élément de fixation (4) dans la première boucle (6) pour former une butée de blocage pour la seconde extrémité (7).

4. Dispositif d'identification selon l'une quelconque des revendications 1 à 3, **caractérisé en ce que** la partie rigide ou semi-rigide s'étire transversalement à l'élément d'attache (3) sur une distance de 30 mm.

5. Dispositif d'identification selon l'une quelconque des revendications 1 à 4, **caractérisé en ce que** l'élément d'attache (3) a une circonférence de 300 mm.

6. Dispositif d'identification selon l'une quelconque des revendications 1 à 5, **caractérisé en ce que** l'élément d'attache (3) est constitué d'un matériau élastique.

7. Dispositif d'identification selon l'une quelconque des revendications 1 à 6, **caractérisé en ce que** l'élément de fixation (4) a la forme d'un disque ou est de forme sphérique ou eliptique.

8. Dispositif d'identification selon l'une quelconque des revendications 1 à 6, **caractérisé en ce que** l'élément de fixation (4) comprend une excroissance en forme de crochet destinée à recevoir et retenir la seconde extrémité de l'élément d'attache.

9. Processus de suivi pour une pluralité de jambons comprenant une étape de pendaison desdits jambons depuis l'une de leurs extrémités, définissant une direction de pendaison (HD) et une étape de montage sur chaque jambon (1) d'un dispositif d'identification respectif, **caractérisé en ce que** les dispositifs d'identification sont tels que définis à l'une quelconque des revendications 1 à 8.

10. Processus de suivi selon la revendication 9, **caractérisé en ce que** l'étape de montage est réalisée en encerclant l'élément d'attache (3) du dispositif d'identification autour du jambon (1) et en faisant coopérer l'élément de fixation (4) de la première extrémité (5) dudit élément d'attache (3) avec la seconde extrémité (7).

11. Processus de suivi selon la revendication 9 ou 10, **caractérisé en ce que** la circonférence de la première boucle (6) est sensiblement le double de la circonférence de la section transversale de la partie de montage (M) du jambon (1) recevant le dispositif d'identification.

12. Processus de suivi selon l'une quelconque des revendications 9 à 11, **caractérisé en ce que** la circonférence de la première boucle (6) de l'élément d'attache (3) est inférieure au double de la circonférence de la partie de montage (M) du jambon (1) recevant le dispositif d'identification.

13. Processus de suivi selon l'une quelconque des revendications 9 à 12, **caractérisé en ce que** l'encerclement de l'élément d'attache (3) autour du jambon (1) est réalisé transversalement à la direction de pendaison (HD) du jambon **(1).**

14. Processus de suivi selon l'une quelconque des revendications 9 à 13, **caractérisé en ce qu'**il comprend une étape d'enlèvement du dispositif d'identification en annulant l'effet de liaison coopérative de la première extrémité (5) de l'élément d'attache (3) à l'élément de fixation (4) de la seconde extrémité (7).
